# EUROPÄISCHE PATENTANMELDUNG

(11) **EP 1 319 554 A1**
(43) Veröffentlichungstag der Anmeldung: **18.06.2003**
(21) Anmeldenummer: 01811215.1
(22) Anmeldetag: 12.12.2001
(51) Int. Cl.: B60R 13/02

(54) **Dachversteifung für Fahrzeuge**

(71) Anmelder: Alcan Technology & Management AG, 8212 Neuhausen am Rheinfall (CH)
(72) Erfinder: Klenke, Detlev, 49134 Wallenhorst (DE); Walsch, Thomas, 49525 Lengerich i.W. (DE); Behre, Kurt, 49075 Osnabrück (DE)

(57) **Zusammenfassung**

Die Erfindung betrifft eine Fahrzeug-Dachversteifung (1) aus einem mehrschichtigen, flächigen Verbundmaterial, enthaltend eine Hartschaumschicht (5) und wenigstens eine über der Hartschaumschicht angeordnete Deckschicht (3a). Die Deckschicht (3a) ist ein über eine Klebverbindung (4a) innig mit der Hartschaumschicht (5) verbundenes textiles Flächengebilde und enthält anorganische und/oder synthetische Fasern. Die Klebverbindung (4a) wird durch die Hartschaumschicht (5) selbst oder durch eine Klebstoffschicht ausgebildet.

## Beschreibung

Vorliegende Erfindung betrifft eine Fahrzeug-Dachversteifung aus einem mehrschichtigen, flächigen Verbundmaterial, enthaltend eine Hartschaumschicht und wenigstens eine über der Hartschaumschicht angeordnete Deckschicht sowie ein Verfahren zur Herstellung einer Dachversteifung.

Bei heutigen Fahrzeugkonstruktionen wird die Dachfestigkeit, auf die es z.B. bei einem Fahrzeugüberschlag ankommt, üblicherweise durch einen Dachrahmen, der direkt mit den Fahrzeugsäulen (A-, B-, C- bzw. D-Säule) verbunden ist, erbracht. Die Dachaussenhaut schliesst lediglich die Dachfläche. Aus Kosten- und Gewichtsgründen wird möglichst darauf verzichtet, sogenannte Dach überspannende Querprofile einzubauen. Damit die Dachaussenhaut, welche in der Regel einem Karosserieblech entspricht, bei Belastungen wie Schneelast, Waschstrasse oder Handdruck bei der Reinigung nicht nachgibt, werden von der Automobilindustrie verschiedene Versteifungsmethoden angewendet.

Neben der vorgenannten Versteifung sollte die Dachhaut überdies auch akustisch gedämpft werden, um z.B. den Trommeleffekt bei Regen zu vermindern.

Aus der EP 0 825 066 B1 ist beispielsweise eine Dachversteifung in Form einer Sandwich-Platte mit einem Polyurethanhartschaum-Kern und beidseitig mit dessen Oberflächen verklebten Kraftliner-Deckschichten beschrieben. Zur Herstellung einer solchen Sandwich-Platte wird in einem ersten Verfahrensschritt ein planes, mehrschichtiges Halbzeug aus zwei äusseren Kraftlinern und einer mittigen Hartschaumschicht hergestellt. Dieses Halbzeug wird anschliessend zu flexiblen Halbzeughälften gespalten und mit Übermass auf die Abmessung der Dachhaut zugeschnitten. Nachfolgend wird ein in die Kontur der Dachhaut zugeschnittener Flächenteil eines einzelnen Kraftliners mit der freien Oberfläche der Hartschaumschicht einer Halbzeughälfte unter Ausbildung einer Sandwich-Platte und Verformung derselben in die Kontur der Dachhaut verklebt.

Die besagte Dachversteifung weist den Nachteil auf, dass der Feuchtigkeitsgehalt des Kraftliners, wie bei zellstoffhaltigen Produkten allseits bekannt, unter dem Einfluss des Umgebungsklimas variieren kann und daher entsprechenden Schwankungen unterworfen ist, was wiederum zu einer Verformung der Sandwich-Platte führen kann. Ferner tritt bei der Herstellung der oben genannten Sandwich-Platte das Problem auf, dass der Feuchtigkeitsgehalt des einzelnen, während des Umformprozesses auf die Hartschaumschicht der Halbzeughälfte applizierten Kraftliners in seltenen Fällen mit dem Feuchtigkeitsgehalt des bereits auf der Hartschaumschicht aufgebrachten Kraftliners exakt übereinstimmt. Dies führt dazu, dass die zwangsläufig stattfindende Angleichung des Feuchtigkeitsgehaltes der beiden Kraftliner-Deckschichten nach der Umformung der Sandwich-Platte zu einer ungewollten Verformung derselben führt. Dies bedeutet, dass die ursprünglich in die Kontur der Dachhaut umgeformte Sandwich-Platte nach deren Entformung aus dem Formwerkzeug in ihrer dreidimensionalen Form nicht formstabil ist.

Aufgabe vorliegender Erfindung ist deshalb, eine dauerhaft formstabile Dachversteifung vorzuschlagen, welche gegenüber wechselhaftem Raumklima, insbesondere gegenüber Feuchtigkeitsschwankungen, unempfindlich ist, wobei die vorgeschlagene Dachversteifung bezüglich Herstellungskosten, Steifigkeit und Gewicht mit bekannten Lösungen möglichst ebenbürtig sein soll.

Erfindungsgemäss wird die Aufgabe dadurch gelöst, dass die Deckschicht ein über eine Klebverbindung mit der Hartschaumschicht verbundenes textiles Flächengebilde, enthaltend anorganische und/oder synthetische Fasern, ist, wobei die Klebverbindung durch die Hartschaumschicht oder durch eine Klebstoffschicht ausgebildet wird.

Die Deckschicht liegt beispielsweise als Gewebe, Gelege, wie Wirrgelege, Geflecht, und vorzugsweise als Vlies bzw. als Vliesstoff vor. Der Vliesstoff kann ein mechanisch, thermisch oder chemisch verfestigter Vlies sein. Das Vlies kann z.B. als genadeltes Vlies vorliegen. Das Vlies besteht zweckmässig aus flächenhaft aufeinander abgelegten ungeordneten Fasern, die mechanisch, thermisch oder chemisch verfestigt sind.

Die Fasern der Deckschicht sind vorzugsweise mittels eines Bindemittels, eines sogenannten "Binders", zu einem Flächengebilde fixiert. Der Binder ist vorzugsweise aus einem thermoplastischen Kunststoff, z.B. aus einem Polyolefin oder Polyvinylacetat (PVAC). Der Binder liegt bevorzugt in einem Anteil von 10 - 30 Gew.-% (Gewichtsprozent), insbesondere von rund 20 Gew.-%, bezogen auf das Gesamtgewicht des Vlieses, vor.

Die Fasern der Deckschicht können anorganische Fasern wie Kohlenstoff- oder Glasfasern oder synthetische Fasern bzw. thermoplastische Kunststofffasern sein. Die Fasern können z.B. auch Aramid-, Polyester- oder Polyethylenfasern sein. Ferner kann die Deckschicht auch ein Gemisch aus zwei oder mehreren der vorgenannten Fasertypen enthalten oder daraus bestehen. Die Fasern der Deckschicht sind vorzugsweise Glasfasern oder Kunststofffasern, insbesondere Polyethylenoder Polyesterfasern, oder ein Gemisch davon.

Die Faser-Geometrie ist von grosser Bedeutung. Die Fasern können z.B. Kurz-, Lang- und/oder Endlosfasern sein. Die Fasern weisen beispielsweise eine Länge von mehr als 8 mm, vorzugsweise von mehr als 12 mm und insbesondere von mehr als 16 mm auf. Die Fasern weisen ferner beispielsweise eine Länge von weniger als 60 mm, vorzugsweise von weniger als 40 mm und insbesondere von weniger als 30 mm auf. Die Dicke der Fasern beträgt beispielsweise 5 bis 30 µm, vorzugsweise 10 bis 20 µm und insbesondere 13 - 15 µm.

Die frei liegenden Seite der Deckschicht, d.h. die der Hartschaumschicht abgewandte Seite der Deckschicht, ist vorzugsweise mit einem Deckfilm aus einem thermoplastischen Kunststoff beschichtet. Der Deckfilm ist vorzugsweise ein mittels Schmelzextrusion aufgetragener Kunststofffilm. Der Deckfilm dringt vorzugsweise nicht oder nur wenig in die Faser- bzw. Porenstruktur des Vlieses ein, sondern überdeckt diese lediglich. Die Kunststoffschicht kann aus einem Polyolefin, insbesondere aus einem Polyethylen, Polypropylen, Polyamid oder PET (Polyethylenterephthalat) bestehen. Der Deckfilm weist beispielsweise ein Flächengewicht von über 20 g/m², und von weniger 50 g/m² und von vorzugsweise rund 40 g/m² auf. Die Dicke des Deckfilms beträgt beispielsweise mehr als 10 µm, vorzugsweise mehr als 35 µm, und weniger als 50 µm, vorzugsweise weniger als 45 µm.

Der Deckfilm dient zur Abdeckung und zum Schutz der darunter liegenden Poren- bzw. Faserstruktur im textilen Flächengebilde. Auf diese Weise wird verhindert, dass Feuchtigkeit und Schmutz in die besagte Porenstruktur eindringen kann.

Der Gesamtaufbau der Deckschicht, d.h. inklusive Deckfilm, weist beispielsweise ein Flächengewicht von über 50 g/m², vorzugsweise über 60 g/m² und insbesondere über 70 g/m² und von weniger 200 g/m², vorzugsweise weniger 180 g/m² und insbesondere weniger 110 g/m² auf. Die Deckschicht liegt beispielsweise in einer Dicke von weniger als 1 mm, vorzugsweise von weniger als 0,7 mm und insbesondere von weniger als 0,5 mm vor.

Die Hartschaumschicht ist vorzugsweise aus einem Polyurethanhartschaum. Die Hartschaumschicht ist beispielsweise offenzellig, teilweise offenzellig und vorzugsweise geschlossenzellig. Die Hartschaumschicht weist beispielsweise über 90% geschlossene Poren auf. Die Hartschaumschicht weist beispielsweise ein Raumgewicht von 35 - 55 kg/m³ auf. Die Dicke der Hartschaumschicht beträgt beispielsweise 3 - 10 mm, vorzugsweise 4 - 8 mm.

Die Klebverbindung zwischen Deckschicht und Hartschaumschicht ist vorzugsweise flächig bzw. vollflächig.

In bevorzugter Ausführung wird die Klebverbindung wenigstens einer Deckschicht durch die Hartschaumschicht selbst gebildet. In diesem Fall erfolgt die Klebverbindung vorzugsweise im sogenannten Bandschmäumverfahren, bei welchem zwischen zwei Deckschichten die Hartschaumschicht kontinuierlich geschäumt wird, wobei während des Schäumungs- und Aushärtungsvorgangs die Hartschaumschicht mit den anliegenden Deckschichten eine innige, trennfeste Klebverbindung eingeht.

Enthält die Dachversteifung zwei Deckschichten aus einem textilen Flächengebilde, so wird die Klebverbindung wenigstens einer Deckschicht in bevorzugter Ausführung durch eine auf die freie Oberfläche der Hartschaumschicht und/oder der Deckschicht applizierte Klebstoffschicht hergestellt.

Der Klebstoff kann beispielsweise aus der Reihe der lösungsmittelhaltigen, lösungsmittelfreien oder wasserbasierenden Ein- oder Zweikomponentenklebstoffe sein. Der Klebstoff kann aus der Reihe der Styrol-Butadien-Klebstoffe, der Polyamid-Klebstoffe, der Ethyl-Vinyl-Acetat-Klebstoffe, der Polyester-Klebstoffe, der Klebstoffe aus PVC mit Weichmachern und Haftvermittlern, der Kautschuke oder Polyacrylate, des Polychloroprens, des Vinylacetates, des Vinylchlorids oder des Vinylidenchlorids und deren Copolymeren oder der Reaktionsklebstoffe bzw. Polymerisationskleber, enthaltend Epoxyde und Säureanhydride, Epoxyde und Polyamide, Epoxide aus Diglycidylethern des Bisphenol A, gegebenenfalls mit Fettsäuren verestert oder mit Polyurethanen modifiziert, Polyisocyanate und Polyole oder Cyanoacrylate, ferner Methacrylate, Polyesterharze mit Styrol oder mit Acrylaten usw., sein. Der Klebstoff kann auch aus reinem Isocyanat hergestellt sein.

Der Klebstoff ist bevorzugt ein Polyurethan-Kleber, umfassend Klebstoffe, welche bereits Polyurethan- oder Urethan-Verbindungen enthalten, sowie Reaktionsklebstoffe, in welchen erst bei der chemischen Aushärtung Urethan-Gruppen gebildet werden. Der Polyurethan-Kleber kann insbesondere ein 1 K-(Komponenten)-Polyurethankleber-System, z.B. basierend auf den Komponenten Polyol und Polyisocyanat, mit Härtung durch Luftfeuchtigkeit oder wärmehärtend, sein. Ferner kann der Polyurethan-Kleber insbesondere auch ein 2K-Polyurethankleber-System, z.B. basierend auf den Komponenten Polyol und Polyisocyanat, mit chemischer Aushärtung bei Raumtemperaturen oder erhöhten Temperaturen, sein.

Der Klebstoff liegt als Schicht mit einem Flächengewicht von beispielsweise 50 - 120 g/m² zwischen der Hartschaumschicht und Deckschicht vor. Der Klebstoff kann als aufschmelzbare Folie angewendet werden oder in flüssiger, zähviskoser oder pastöser Form vorliegen und durch Streichen, Rakeln, Rollen oder Sprühen aufgetragen werden.

Ein bedeutender Aspekt vorliegender Erfindung liegt darin, dass die Klebverbindung in die Faserstruktur, d.h. in die Porenstruktur des textilen Flächengebildes eingreift und dadurch eine Verankerung und gegebenenfalls eine Versteifung der Deckschicht auf der Hartschaumschicht bewirkt. Die Klebverbindung kann gegebenenfalls, in Abhängigkeit der Durchdringtiefe, auch eine zusätzliche Versteifung der Deckschicht bewirken, indem der Klebstoff der Klebverbindung, vergleichbar mit einem Faserverbundteil, wie eine Matrix wirkt, wobei der Klebstoff z.B. ein Kaschierkleber oder der Hartschaumkörper selbst sein kann.

In einer ersten Ausführungsvariante liegt die Dachversteifung als mehrschichtiges flächenförmiges Verbundmaterial, bestehend aus einer Hartschaumschicht und einer einseitig auf dessen einen freien Oberfläche über eine flächige bzw. vollflächige Klebverbindung angeordneten Deckschicht aus einem textilen Flächengebilde wahlweise mit einem Deckfilm, vor. Die besagte Dachversteifung ist bzw. wird zweckmässig mit der anderen freien Oberfläche der Hartschaumschicht mittels einer flächigen bzw. vollflächigen Klebverbindung an die Innenseite der Dachhaut geklebt. Die Klebverbindung kann aus einem der vorgenannten Klebstoffe bestehen.

Das Verbundmaterial bildet auf diese Weise mit der Dachhaut eine Sandwich-Struktur aus, wobei die Dachhaut des Fahrzeuges eine erste und das textile Flächengebilde eine zweite Sandwich-Deckschicht ausbilden, welche die Hartschaumschicht als Sandwich-Kern einschliessen.

In einer zweiten Ausführungsvariante liegt die Dachversteifung als mehrschichtiges flächenförmiges Verbundmaterial in Form einer Sandwich-Struktur vor, bestehend aus einer den Sandwich-Kern bildenden Hartschaumschicht und beidseitig auf dessen freien Oberflächen über eine flächige bzw. vollflächige Klebverbindung angeordneten Deckschichten aus einem textilen Flächengebilde wahlweise mit einem Deckfilm. Die besagte Dachversteifung ist zweckmässig mittels einer Klebverbindung an die Innenseite der Dachhaut geklebt. Die Klebverbindung ist vorzugsweise teilflächig und liegt insbesondere in Form von in Fahrzeuglängsrichtung orientierten Klebraupen vor.

Die erfindungsgemässen Dachversteifung ist herstellbar dadurch, dass ein planes mehrschichtiges Verbundmaterial angefertigt wird, wobei zwischen zwei Deckschichten aus textilen Flächengebilden ein schäumbares Ausgangsgemisch eingeführt wird, und das Ausgangsgemisch in einer nachfolgenden Doppelbandanlage zwischen den textilen Flächengebilden mittels eines Bandschäumverfahrens zu einem Hartschaum bandgeschäumt und ausgehärtet wird, und die Hartschaumschicht während des Aufschäumens unter Ausbildung einer Sandwich-Struktur eine innige, trennfeste Verbindung mit den Deckschichten eingeht, und das Verbundmaterial in Zuschnitte zugeschnitten und mittig entlang seiner Flächenebene in Teilschichtverbunde gespalten wird.

Das schäumbare Ausgangsgemisch ist vorzugsweise ein in flüssiger Form zugeführtes PUR-System. Die vorgenannten Verfahrensschritte erfolgen vorzugsweise kontinuierlich und in-line. Die textilen Flächengebilde werden vorzugsweise ab Rollen der Bandschäumanlage zugeführt. Das Zuschneiden und mittige Spalten der kontinuierlich hergestellten Sandwich-Struktur erfolgt zweckmässig über entsprechend in-line angeordnete Schneidwerkzeuge.

Die genannte mittige Teilung bzw. Spaltung der Sandwich-Platten bzw. Zuschnitte ergibt zwei gleichartig aufgebaute, biegsame mehrschichtige Teilschichtverbunde als Ausgangsmaterial zur Herstellung der Dachversteifung. Die Sandwich-Platten können auch asymmetrisch, d.h. nicht mittig, geteilt werden. Die Biegsamkeit der Teilschichtverbunde ergibt sich dadurch, dass eine der äusseren Deckschichten nach dem Spalten des Schichtverbundes fehlt.

In abgewandelter Ausführung der Erfindung kann die flächige Sandwich-Struktur auch erst nach dem mittigen Teilen zu Teilschichtverbunden in einzelne Zuschnitte, d.h. Sandwich-Platten, zugeschnitten werden.

In einer ersten Ausführung der Erfindung wird die Sandwich-Struktur in die Endform der Dachversteifung zugeschnitten sowie geteilt. Der Teilschichtverbund wird in einem der nachfolgenden Verfahrensschritten mit der freien Oberfläche der Hartschaumschicht unter Ausbildung einer flächigen bzw. vollflächigen, dauerhaften Klebverbindung an die Dachhaut gefügt, derart dass die Dachhaut gemeinsam mit der Dachversteifung eine steife Sandwich-Struktur ausbildet, wobei die Dachhaut die erste und das textile Flächengebilde die zweite Sandwich-Deckschicht ausbilden. Der Fügeprozess kann z.B. mit der sogenannten Luftsacktechnik geschehen, bei welcher ein unterhalb der Dachhaut angeordneter aufblasbarer Sack angeordnet wird, welcher mit einem Gas, z.B. Luft, gefüllt wird und durch die Volumenvergrösserung die zuvor mittels eines Klebstoffes an die Dachhaut angebrachte und mittels Montagehilfen justierte Dachversteifung unter Druckbeaufschlagung an die Dachhaut presst, derart dass zwischen Dachhaut und Dachversteifung eine flächige bzw. vollflächige, trennfeste Klebverbindung ausgebildet wird.

Die Biegsamkeit der Dachversteifung vor dem verkleben mit der Dachhaut erlaubt eine optimale Anpassung derselben an die Dachkontur, so dass auf eine vorangehende Umformung der Dachversteifung in einem Formwerkzeug fallweise verzichtet werden kann. Durch das vollflächige Verkleben mit der Dachhaut entsteht in Verbindung mit dem Teilschichtverbund bzw. Halbzeug ein konstruktives Sandwichelement, wodurch die dynamische und statische Belastbarkeit, d.h. die Dachbeulsteifigkeit des Daches deutlich erhöht wird.

In einer zweiten Ausführung der Erfindung wird die Sandwich-Struktur in die Rohform der fertigen Dachversteifung zugeschnitten sowie geteilt, wobei der Zuschnitt zweckmässig in Übermass erfolgt. In einem nachfolgenden Schritt wird auf die freie Oberfläche der Hartschaumschicht des biegsamen Teilschichtverbundes eine Schichtabfolge aus einem Klebstoff und einer Deckschicht aus einem textilen Flächengebilde aufgebracht. Der Teilschichtverbund mit Schichtabfolge wird hernach in ein die Kontur bzw. Wölbung der Dachhaut wiedergebendes beheizten Formwerkzeug eingelegt und unter flächiger Verklebung der Schichtabfolge mit dem Teilschichtverbund und Ausbildung einer Sandwich-Struktur in eine steife, formstabile Dachversteifung überführt, wobei der Klebstoff eine innige Verbindung mit der Deckschicht eingeht. Die Sandwich-Struktur wird beispielsweise unter Anwendung von leichtem Druck und erhöhten Temperaturen von z.B. rund 105 - 110°C während ca. 40 s im Formwerkzeug in die Dachform verpresst. Nach Aushärten bzw. Ausreagieren des Klebstoffes kann die formstabile Sandwich-Struktur entformt werden. Die ein Übermass aufweisende Dachversteifung wird nach Entformung in einem Schneidwerkzeug in ihre Endform zugeschnitten.

Der wahlweise aufgebrachte Deckfilm wird bevorzugt vor dem Bandschäumverfahren einseitig auf die spätere Aussenseite der Deckschicht, d.h. auf das Rohvlies, appliziert. Der Auftrag des vorzugsweise thermoplastischen Deckfilms erfolgt mittels eines Extrusionsverfahrens über eine Breitschlitzdüse und anschliessender Abkühlung des Verbundes über Kühlrollen. Das Auftragen der Deckschicht kann in-line in einem dem Bandschäumverfahren vorangehenden Prozess erfolgen. Ferner kann der Auftrag der Deckschicht als von der Herstellung der Dachversteifung getrennter Verfahrensschritt erfolgen, wobei in diesem Fall der Bandschäumanlage der beschichtete Vliessstoff direkt ab Rolle zugeführt wird.

Die erfindungsgemässe Dachversteifung weist eine ausgezeichnete Formstabilität auf, auch dann wenn die Dachversteifung im Fahrzeug eingebaut ist und thermischen Belastungen durch Sonneneinstrahlung ausgesetzt ist. Ferner ist besagte Dachversteifung dank ihres zellstofffreien Schichtaufbaus feuchtigkeitsunempfindlich, d.h. sämtliche der zur Herstellung der Dachversteifung verwendeten Komponenten sind nicht hygroskopisch. Durch Einsatz eines Hartschaumes erhält man eine optimale Geräuschdämpfung und eine hohe thermische Isolation. Diese beruht auf der Schwingungsfähigkeit der einzelnen Zellen und deren Geschlossenzelligkeit. Die erfindungsgemässe Dachversteifung zeichnet sich ferner durch ihr geringes Flächengewicht aus. Da der Ausdehnungskoeffizient der Dachversteifung annähernd demjenigen der Dachhaut entspricht, ist die Klebverbindung zwischen Dachversteifung und Dachhaut nahezu spannungsneutral. Dank dem Einsatz von zellstofffreien Deckschichten kommt es zu keinerlei feuchtigkeitsbedingter Geruchsbildung.

Im folgenden wird die Erfindung beispielhaft und mit Bezug auf die beiliegenden Zeichnungen näher erläutert. Es zeigen:
- Fig. 1a:: schematische Querschnittsdarstellung der Schichtabfolge einer erfindungsgemässe Fahrzeug-Dachversteifung;
- Fig. 1b:: schematischer Querschnitt durch den Aufbau einer an der Fahrzeugdachhaut befestigten Dachversteifung gemäss Fig. 1a;
- Fig. 2a:: schematische Querschnittsdarstellung der Schichtabfolge einer weiteren erfindungsgemässe Fahrzeug-Dachversteifung;
- Fig. 2b:: schematischer Querschnitt durch den Aufbau einer an der Fahrzeugdachhaut befestigten Dachversteifung gemäss Fig. 2a;

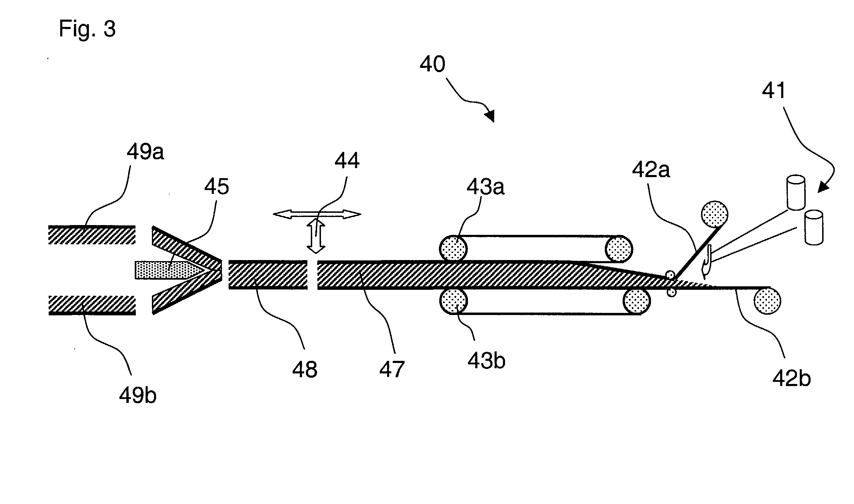

- Fig. 3:: schematische Darstellung einer Vorrichtung zur Herstellung von Teilschichtverbunden für erfindungsgemässe Dachversteifungen.

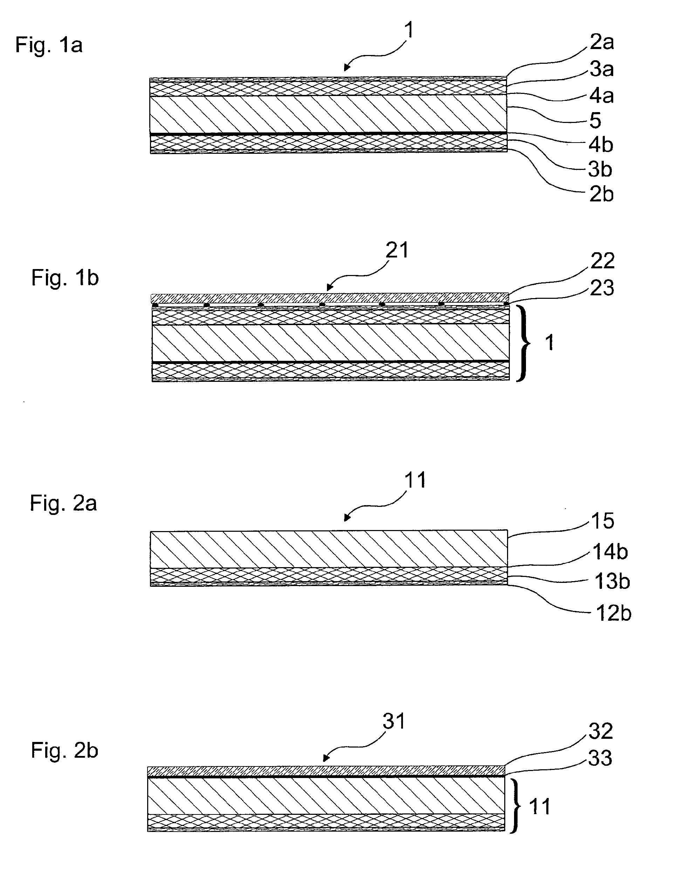

Die Dachversteifung 1 gemäss Fig. 1a ist eine Sandwich-Struktur mit einem Kern aus einer Hartschaumschicht 5, vorzugsweise bestehend aus einem Polyurethan-Hartschaum. Eine erste Deckschicht 3a aus einem textilen Flächengebilde ist auf einer ersten Oberfläche der Hartschaumschicht 5 angeordnet und unter Ausbildung einer Klebverbindung 4a trennfest mit dieser verbunden, wobei die Klebverbindung durch die Hartschaumschicht 5 ausgebildet wird. Eine zweite Deckschicht 3b aus einem textilen Flächengebilde ist über eine flächige Klebstoffschicht 4b trennfest auf der zweiten Oberfläche der Hartschaumschicht 5 angeordnet. Die Klebstoffschicht 4b ist vorzugsweise ein 1K- oder 2K-Polyurethanklebesystem. Auf der freiliegenden Oberfläche der Deckschichten 3a,b ist eine Deckfilm 2a,b aus Kunststoff, vorzugsweise ein thermoplastischer Extrusionsfilm, angeordnet.

Fig. 1b zeigt einen Aufbau 21 mit einer über eine Klebstoffverbindung 23 an eine Fahrzeug-Dachhaut 22 angebrachten Dachversteifung 1 gemäss Fig. 1a. Die Dachversteifung 1 ist über Klebstoffraupen 23 an die Dachhaut 22 befestigt. Die Klebstoffverbindung kann jedoch alternativ auch eine flächige Klebstoffverbindung sein. Die Klebstoffraupen sind zweckmässig parallel zur Fahrzeuglängsrichtung ausgerichtet.

Die Dachversteifung 11 gemäss Fig. 2a besteht aus einer Hartschaumschicht 15, vorzugsweise bestehend aus einem Polyurethan-Hartschaum. Eine Deckschicht 13b aus einem textilen Flächengebilde ist auf einer ersten Oberfläche der Hartschaumschicht 15 angeordnet und unter Ausbildung einer Klebverbindung 14b trennfest mit dieser verbunden, wobei die Klebverbindung 14b durch die Hartschaumschicht 15 selbst ausgebildet wird. Auf der freiliegenden Oberfläche der einen Deckschicht 3b ist ein Deckfilm 12b aus Kunststoff, vorzugsweise ein thermoplastischer Extrusionsfilm, angeordnet.

Fig. 2b zeigt einen Aufbau 31 mit einer über eine vollflächige Klebstoffverbindung 33 an eine Fahrzeug-Dachhaut 32 angebrachten Dachversteifung 11 gemäss Fig. 2a. Die Dachversteifung 11 ist über eine flächige Klebstoffschicht 33 an die Dachhaut 32 befestigt. Die Klebstoffschicht 33 ist vorzugsweise ein 1 K- oder 2K-Polyurethanklebesystem. Die Dachversteifung 11 bildet in dieser Ausführung zusammen mit der Fahrzeug-Dachhaut 32 eine Sandwich-Struktur mit versteifender Wirkung aus.

Die Herstellung von Teilschichtverbunden 49a,b für Dachversteifungen erfolgt in-line an einer Fertigungsanlage 40. Zur Herstellung einer erfindungsgemässen Dachversteifung wird zwischen zwei von Rollen abgewickelten kontinuierlichen, aussenseitig mit einem Deckfilm beschichteten textilen Flächengebilden 42a,b eine schäumbare Ausgangsmischung 41 zugeführt. In einer nachfolgenden Doppelbandanlage 43a,b wird die Ausgangsmischung 41 zwischen den textilen Flächengebilden 42a,b gemäss einem Bandschäumverfahren zu einem Hartschaum bandgeschäumt und ausgehärtet, wobei der Hartschaumkern mit den Deckschichten eine innige Klebverbindung eingeht. Die auf diese Weise kontinuierlich hergestellte flächige Sandwich-Struktur 47 wird nachfolgend an einem ersten Schneidwerkzeug 44 in-line in einzelne Sandwich-Platten, d.h. in sogenannte Zuschnitte 48, abgelängt. Die Zuschnitte 48 werden nachfolgend an einem zweiten Schneidwerkzeug 45 ebenfalls in-line entlang ihrer Flächenebene mittig zu Teilschichtverbunden 49a,b entzwei geschnitten.

Um Dachversteifungen 11 gemäss Fig. 2 zu erhalten, brauchen die Teilschichtverbunde 49a,b nur noch in ihre Endform zugeschnitten zu werden.

Um Dachversteifungen 1 gemäss Fig. 1 zu erhalten, werden die Teilschichtverbunde 49 a,b auf der freien Oberfläche der Hartschaumschicht 5 und/oder auf einem Zuschnitt eines einzelnen textilen Flächengebildes 3b mit einem Klebstoff 4b beaufschlagt. Der Zuschnitt 3b eines einzelnen textilen Flächengebildes wird nachfolgend auf die genannte Oberfläche der Hartschaumschicht 5 aufgebracht. Der schichtergänzte Teilschichtverbund 49a,b wird nachfolgend in ein Formwerkzeug gelegt (nicht gezeigt) und unter inniger Verbindung der ergänzten Schichten 3b, 4b mit dem Teilschichtverbund 49a,b in die Kontur des Daches zu einem steifen, formstabilen Sandwich-Element endgeformt und anschliessend mittels eines Schneidwerkzeuges in die Aussenkontur des Daches zur fertigen Dachversteifung 1 geschnitten. Teilschichtverbunde 49a,b, die nicht umgehend dem Umformprozess zugeführt werden, werden zweckmässig zwischengelagert.

## Patentansprüche

1. Fahrzeug-Dachversteifung (1) aus einem mehrschichtigen, flächigen Verbundmaterial, enthaltend eine Hartschaumschicht (5) und wenigstens eine über der Hartschaumschicht angeordnete Deckschicht (3a),
**dadurch gekennzeichnet, dass**
die Deckschicht (3a) ein über eine Klebverbindung (4a) mit der Hartschaumschicht (5) verbundenes textiles Flächengebilde, enthaltend anorganische und/oder synthetische Fasern, ist, wobei die Klebverbindung (4a) durch die Hartschaumschicht (5) oder durch eine Klebstoffschicht ausgebildet wird.

2. Fahrzeug-Dachversteifung nach Anspruch 1, **dadurch gekennzeichnet, dass** die Fahrzeug-Dachversteifung (1) beidseitig auf der Hartschaumschicht (5) über Klebverbindungen (4a,b) angeordnete Deckschichten (3a,b) aus einem textilen Flächengebilde aufweist.

3. Fahrzeug-Dachversteifung nach einem der Ansprüche 1 bis 2, **dadurch gekennzeichnet, dass** das textile Flächengebilde ein Gewebe, Gelege, Geflecht ist oder aus flächenhaft aufeinander abgelegten ungeordneten Fasern, die mechanisch, thermisch oder chemisch verfestigt sind, besteht, und vorzugsweise ein Vlies ist.

4. Fahrzeug-Dachversteifung nach einem der Ansprüche 1 bis 3, **dadurch gekennzeichnet, dass** das textile Flächengebilde Glasfasern, synthetischen Fasern oder ein Gemisch davon enthält oder daraus besteht.

5. Fahrzeug-Dachversteifung nach einem der Ansprüche 1 bis 4, **dadurch gekennzeichnet, dass** die Fasern Kurz- und/oder Langfasern und vorzugsweise Fasern mit einer Länge von grösser 8 mm und kleiner 60 mm sind.

6. Fahrzeug-Dachversteifung nach einem der Ansprüche 1 bis 5, **dadurch gekennzeichnet, dass** die frei liegende Seite der Deckschicht (3a,b) mit einem Deckfilm (2a,b) aus einem thermoplastischen Kunststoff beschichtet ist, vorzugsweise aus einem Polyolefin, insbesondere aus Polyethylen, Polypropylen oder PET.

7. Fahrzeug-Dachversteifung nach einem der Ansprüche 1 bis 6, **dadurch gekennzeichnet, dass** die Klebverbindung (4a,b) in die Faser- und Porenstruktur des textilen Flächengebildes eingreift und dadurch eine Verankerung der Deckschicht (3a,b) auf der Hartschaumschicht (5) bewirkt.

8. Verfahren zur Herstellung einer Fahrzeug-Dachversteifung nach Anspruch 1,
**dadurch gekennzeichnet, dass**
ein planes mehrschichtiges Verbundmaterial angefertigt wird, wobei zwischen zwei Deckschichten (42a,b) aus textilen Flächengebilden ein schäumbares Ausgangsgemisch (41) eingeführt wird, und das Ausgangsgemisch in einer nachfolgenden Doppelbandanlage (43a,b) zwischen den textilen Flächengebilden mittels eines Bandschäumverfahrens zu einem Hartschaum bandgeschäumt und ausgehärtet wird, und die Hartschaumschicht während des Aufschäumens unter Ausbildung einer Sandwich-Struktur eine innige, trennfeste Verbindung mit den Deckschichten eingeht, und das Verbundmaterial (47) in Zuschnitte (48) geschnitten und mittig entlang seiner Flächenebene in Teilschichtverbunde (49a,b) gespalten wird.

9. Verfahren nach Anspruch 8, **dadurch gekennzeichnet, dass** auf die freie Oberfläche der Hartschaumschicht des Teilschichtverbundes eine Schichtfolge aus einem Klebstoff (4b) und einer zugeschnittenen einzelnen Deckschicht (3b) aus einem textilen Flächengebilde aufgebracht und der Teilschichtverbund mit Schichtabfolge in ein die Kontur bzw. Wölbung der Dachhaut wiedergebendes Formwerkzeug eingelegt wird und unter Verklebung der Schichtabfolge mit dem Teilschichtverbund eine formstabile Sandwich-Struktur entsteht, wobei der Klebstoff (4b) mit der Deckschicht (3b) eine innige Verbindung eingeht, und die Sandwich-Struktur zu einer fertigen Dachversteifung (1) zugeschnitten wird.

10. Fahrzeug mit einer innenseitig an eine Dachhaut (32) befestigten Dachversteifung gemäss Anspruch 1,
**dadurch gekennzeichnet, dass**
die Dachversteifung (11) mit seiner freien Oberfläche der Hartschaumschicht (15) über eine flächige Klebverbindung (14b) an die Dachhaut (32) geklebt ist und die Dachversteifung (11) zusammen mit der Dachhaut (32) eine Sandwich-Struktur ausbildet, wobei die Dachhaut (32) eine erste und die Deckschicht aus einem textilen Fasergebilde (13b) eine zweite Deckschicht und die Hartschaumschicht (15) die dazwischen liegende Kernschicht ausbilden.
